(19) Europäisches Patentamt
European Patent Office
Office européen des brevets

(11) Veröffentlichungsnummer: **0 518 149 A2**

(12) **EUROPÄISCHE PATENTANMELDUNG**

(21) Anmeldenummer: **92109189.8**

(22) Anmeldetag: **01.06.92**

(51) Int. Cl.5: **C08K 5/09**, C08K 5/12, C08K 5/06, C08L 69/00

(30) Priorität: **12.06.91 DE 4119329**

(43) Veröffentlichungstag der Anmeldung: **16.12.92 Patentblatt 92/51**

(84) Benannte Vertragsstaaten: **BE DE FR GB IT**

(71) Anmelder: **BAYER AG**

**W-5090 Leverkusen 1 Bayerwerk(DE)**

(72) Erfinder: **Lundy, Charles, Dr.**
**Miles Inc.**
**Pittsburgh PA 15205-9741(US)**
Erfinder: **Grigo, Ulrich, Dr.**
**Michelsheide 9**
**W-4152 Kempen 3(DE)**
Erfinder: **Sommer, Alexa, Dr.**
**Unterscheider Weg 43a**
**W-5060 Bergisch Gladbach 2(DE)**
Erfinder: **Horn, Klaus, Dr.**
**Bodelschwinghstrasse 12**
**W-4150 Krefeld(DE)**
Erfinder: **Sommer, Klaus, Dr.**
**Unterscheider Weg 43a**
**W-5060 Bergisch Gladbach 2(DE)**
Erfinder: **Becker, Arno, Dr.**
**Bodelschwinghstrasse 22**
**W-4150 Krefeld(DE)**

# (54) Kernbromierte Phthalsäurederivate als stabilisatoren für Polycarbonate gegen Gammastrahlung.

(57) Gegenstand der vorliegenden Erfindung ist die Verwendung von kernbromierten Phthalsäurederivaten, gegebenenfalls in Kombination mit Polyalkylenoxiden der Formel (V)

$$R - O - (CH_2 - \underset{}{\overset{R'}{\overset{|}{C}H}} - O)_x - R \qquad (V)$$

worin

R H, $C_1$-$C_6$-Alkyl, Tetrahydropyranyl oder ein Silyl-Rest,
R' H oder $C_1$-$C_6$-Alkyl und
X eine ganze Zahl von 1 bis 100 sind,

zur Stabilisierung von thermoplastischen Polycarbonaten gegen die Einwirkung von Gammastrahlen.

EP 0 518 149 A2

Gegenstand der vorliegenden Erfindung ist die Verwendung von kernbromierten Phthalsäurederivaten zur Stabilisierung von thermoplastischen Polycarbonaten gegen die Einwirkung von Gammastrahlen.

Die thermoplastischen Polycarbonate sind aufgrund ihrer physikalischen Eigenschaften für Anwendungen im medizinischen Bereich geeignet. Für diese Anwendungen ist es wichtig, daß die entsprechenden Artikel und Formkörper aus den thermoplastischen Polycarbonaten sterilisierbar sein müssen, und zwar beliebig oft, ohne daß sie dabei abgebaut werden. Die Sterilisierung erfolgt hierbei durch Bestrahlung mit $\gamma$-Strahlen, da die Behandlung mit Wasserdampf die Polycarbonate auf Dauer schädigt.

Die Bestrahlung mit $\gamma$-Strahlen verursacht jedoch auf Dauer ebenfalls eine Schädigung der Polycarbonate, indem diese gelb gefärbt werden. Durch die erfindungsgemäße Verwendung von kernbromierten Phthalsäurederivaten wird diese Schädigung durch $\gamma$-Strahlen weitgehend unterdrückt.

Es gibt verschiedene Methoden, die thermoplastischen Polycarbonate gegen die Einwirkung von $\gamma$-Strahlen resistent zu machen (siehe beispielsweise EP-OS 0 376 289, US-PS 4 624 972, US-PS 4 904 710, EP-OS 0 152 012, EP-OS 0 296 473 (Mo 2971), US-PS 4 804 692 (Mo 3005), US-PS 4 963 598 (Mo 3047) US-PS 4 874 802 (Mo 3071), EP-OS 3 841 110 (Mo 3170) und US-PS 4 873 271 (Mo 3208)). Kernbromierte Phthalsäurederivate werden darin nicht erwähnt.

In der EP-OS 0 376 289 ist der kombinierte Einsatz von Polyalkylenglykolen mit bromhaltigen Oligocarbonaten zum Strahlenschutz für Polycarbonate beschrieben. Demgegenüber hat die erfindungsgemäße Kombination von Tetrabromphthalsäureanhydrid mit Polypropylenglykolen Vorteile, ebenso wie Tetrabromphthalsäureanhydrid allein gegenüber bromiertem Oligocarbonat allein als Stabilisator von Polycarbonaten gegen $\gamma$-Strahlen Vorteile zeigt.

Andererseits ist der Zusatz von bromierten Phthalsäurederivaten zu Polycarbonaten zum Zwecke der Flammfestausrüstung bekannt (siehe beispielsweise DE-OS 1 802 184 (Mo 981) bzw. US-PS 3 535 300, DE-OS 2 013 496, US-PS 3 873 567, DE-PS 2 740 850 (Le A 18 401), US-PS 4 208 489 und US-PS 4 673 699). Die Verwendung von bromierten Phthalsäurederivaten zur Stabilisierung von Polycarbonatformteilen gegen $\gamma$-Strahlen wird in diesen Literatur-Stellen nicht angesprochen und nicht nahegelegt.

Kernbromierte Phthalsäurederivate sind vorzugsweise bromierte Phthalsäureanhydride, Phthalsäureimide, Phthalsäurediester und Phthalsäurediamide, wobei die Bromsubstituenten 1, 2, 3 oder 4 Positionen im Phthalsäurearomat einnehmen können.

Geeignete bromierte Phthalsäureanhydride sind somit solche der Formel (I)

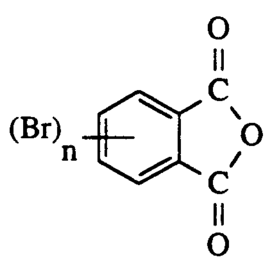

(I)

worin

n 1, 2, 3 oder 4 ist.

Geeignete kernbromierte Phthalsäureimide sind solche der Formel (II)

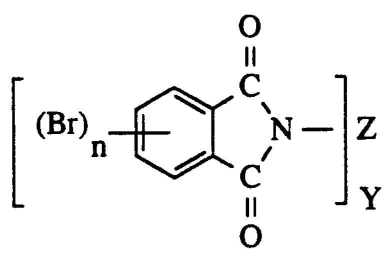

(II)

worin

n 1, 2, 3 oder 4 ist,

Y 1, 2, 3 oder 4 ist, und worin

Z Wasserstoff oder ein ein-, zwei-, drei- oder vierbindiger organischer Rest ist, beispielsweise ein $C_1$-

$C_{18}$-Alkyl, $C_2$-$C_{18}$-Alkylen, ein dreibindiger $C_3$-$C_{18}$-Alkanrest oder ein vierbindiger $C_4$-$C_{18}$-Alkanrest ist, oder beispielsweise ein $C_5$-$C_6$-Cycloalkyl oder $C_5$-$C_6$-Cycloalkylenrest ist, oder beispielsweise ein $C_7$-$C_{12}$-Aralkylrest ist.

Geeignete Alkyl-Reste sind beispielsweise Methyl, Ethyl, Propyl, Isopropyl und Butyl.

Geeignete Alkylen-Reste sind beispielsweise Ethylen, Propylen, Butylen und 1,6-Hexamethylen.

Geeignete Cycloalkyl-Reste und Cycloalkylen-Reste sind beispielsweise Cyclohexyl, Cyclopentyl, Cyclohexylen und Cyclopentylen.

Geeignete Aralkyl-Reste sind beispielsweise Benzyl und Phenethyl.

Geeignete kernbromierte Phthalsäurediester sind solche der Formel (III)

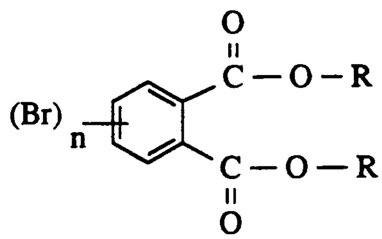

(III)

worin

n 1, 2, 3 oder 4 ist, und

R ein $C_1$-$C_{18}$-Alkyl, $C_5$-$C_6$-Cycloalkyl, $C_6$-$C_{10}$-Aryl oder $C_7$-$C_{12}$-Aralkyl ist.

Geeignete kernbromierte Phthalsäurediamide sind solche der Formel (IV)

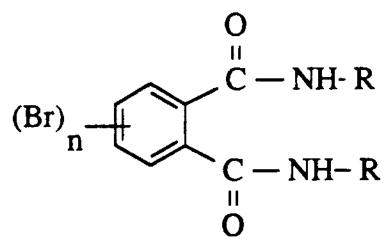

(IV)

worin

n 1, 2, 3 oder 4 ist und

R ein $C_1$-$C_{18}$-Alkyl, $C_5$-$C_6$-Cycloalkyl, $C_6$-$C_{10}$-Aryl oder $C_7$-$C_{12}$-Aralkyl ist.

Geeignete Alkyl-Reste in (III) und (IV) sind Methyl, Ethyl, Propyl und Butyl.

Geeignete Cycloalkyl-Reste in (III) und (IV) sind Cyclohexyl und Cyclopentyl.

Geeignete Aryl-Reste in (III) und (IV) sind Phenyl und Naphthyl.

Geeignete Aralkyl-Reste in (III) und (IV) sind Benzyl, Methylbenzyl, Ethylbenzyl und Propylbenzyl.

Ein Beispiel für die Verbindungen der Formel (I) ist Tetrabromphthalsäureanhydrid.

Ein Beispiel für die Verbindungen der Formel (II) ist Hexamethylendiamin-bis-tetrabromphthalsäurediimid.

Beispiele für Verbindungen der Formel (III) sind die Tetrabromphthalsäuredimethylester und -diethylester.

Ein Beispiel für die Verbindungen der Formel (IV) ist Tetrabromphthalsäuredi-(N-phenyl)-amid.

Die Verwendung der kernbromierten Phthalsäurederivate zur Sterilisierung der thermoplastischen Polycarbonate erfolgt in Mengen von 0,01 Gew.-% bis 10 Gew.-%, vorzusweise von 0,1 Gew.-% bis 5,0 Gew.-% und insbesondere von 0,5 Gew.-% bis 1,5 Gew.-%, bezogen jeweils auf Gewicht an thermoplastischem Polycarbonat und kernbromiertem Phthalsäurederivat.

Die erfindungsgemäß zu stabilisierenden thermoplastischen Polycarbonate sind literaturbekannt.

Erfindungsgemäß zu stabilisierende Polycarbonate sind thermoplastische, aromatische Homopolycarbonate und Copolycarbonate, denen z.B. ein oder mehrere der folgenden Diphenole zugrundeliegen:

Hydrochinon

Resorcin

Dihydroxydiphenyle

Bis-(hydroxyphenyl)-alkane

Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
$\alpha,\alpha'$-Bis-(hydroxyphenyl)-diisopropylbenzole
sowie deren kernalkylierte und kernhalogenierte Verbindungen. Diese und weitere geeignete Diphenole sind z.B. in den US-Patentschriften 3 028 365, 3 275 601, 3 148 172, 3 062 781, 2 991 273, 3 271 367, 2 999 835, 4 982 014 und 2 999 846, in den deutschen Offenlegungsschriften 1 570 703, 2 063 050, 2 063 052, 2 211 956, 2 211 957, der franz. Patentschrift, 1 561 518 und in der Monographie "H. Schnell, Chemistry and Physics of Polycarbonates, Interscience Publishers, New York, 1964" beschrieben.

Bevorzugte Diphenole sind z.B.:
4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
$\alpha,\alpha'$-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-methan
Bis-(3,5-Dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
$\alpha,\alpha'$- Bis-(3,5-dimethyl-4-hydroxyphenyl)-p-diisopropylbenzol
2,2-Bis-(3,5-dichlor-4-hydroxyphenyl)-propan und
1,1-Bis-(4-hydroxyphenyl)-3,3,5-trimethylcylohexan.

Besonders bevorzugte Diphenole sind z.B.:
2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan und
1,1-Bis-(4-hydroxyphenyl)-3,3,5-trimethyl-cyclohexan.

Bevorzugte aromatische Polycarbonate sind solche, denen ein oder mehrere der als bevorzugt genannten Diphenole zugrundliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 1,1-Bis-(4-hydroxyphenyl)-3,3,5-trimethylcyclohexan.

Die aromatischen Polycarbonate können nach bekannten Verfahren hergestellt werden, so z.B. nach dem Schmelzumesterungsverfahren aus Bisphenol und Diphenylcarbonat und dem Zweiphasengrenzflächenverfahren aus Bisphenolen und Phosgen, wie es in der obengenannten Literatur beschreiben ist.

Die aromatischen Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, beispielsweise solchen mit drei oder mehr als drei phenolischen Hydroxygruppen verzweigt sein.

Polycarbonate dieser Art sind z.B. in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 2 500 092 beschrieben.

Einige der verwendbaren Verbindungen mit drei oder mehr als drei phenolischen Hydroxygruppen sind beispielsweise Phloroglucin, 4,6-Dimethyl-2.4.6-tri-(4-hydroxyphenyl)-hepten-2, 4.6-Dimethyl-2.4.6-tri-(4-hydroxyphenyl)-heptan, 1.3.5-Tri-(4-hydroxyphenyl)-benzol, 1.1.1-Tri-(4-hydroxyphenyl)-ethan, Tri-(4-hydroxyphenyl)-phenylmethan, 2.2-Bis-[4.4-bis-(4-hydroxyphenyl)-cyclohexyl]-propan, 2.4-Bis-(4-hydroxyphenylisopropyl)-phenol, 2.6-Bis-(2'-hydroxy-5'-methyl-benzyl)-4-methylphenol, 2-(4-Hydroxyphenyl)-2-(2.4-dihydroxyphenyl)-propan, Hexa-(4-(4-hydroxyphenylisopropyl)phenyl)-ortho-terephthalsäureester, Tetra-(4-hydroxyphenyl)-methan, Tetra-(4-(4-hydroxyphenylisopropyl)-phenoxy)-methan und 1.4-Bis-((4'.4''-dihydroxytriphenyl)-methyl)-benzol. Einige der sonstigen dreifunktionellen Verbindungen sind 2.4-Dihydroxybenzoesäure, Trimesinsäure, Cyanurchlorid und 3.3-Bis-(4-hydroxy-3-methyl-phenyl)-2-oxo-2,3-dihydroindol.

Die aromatischen Polycarbonate sollen in der Regel mittlere Gewichtsmittel-Molekulargewichte $\overline{M}_w$ von 10 000 bis über 200 000, vorzugsweise von 20 000 bis 80 000 haben, ermittelt durch Messungen der rel. Viskosität in $CH_2Cl_2$ bei 25 ° C und einer Konzentration von 0,5 g in 100 ml $CH_2Cl_2$.

Zur Einstellung des Molekulargewichts $\overline{M}_w$ der Polycarbonate werden in bekannter Weise Kettenabbrecher, wie beispielsweise Phenol oder Halogenphenole oder Alkylphenole in den berechneten Mengen eingesetzt.

Die Einarbeitung der kernbromierten Phthalsäurederivate in die zu stabilisierenden Polycarbonate erfolgt in bekannter Weise.

Die Verwendung der kernbromierten Phthalsäurederivate kann auch in Kombination mit Polyalkylenoxiden der Formel (V)

$$R - O - (CH_2 - \overset{\overset{R'}{|}}{C}H - O)_x - R \qquad (V)$$

worin

R  H, $C_1$-$C_6$-Alkyl, Tetrahydropyranyl oder ein Silyl-Rest,

R'  H oder $C_1$-$C_6$-Alkyl und

X  eine ganze Zahl von 1 bis 100, vorzugsweise von 10 bis 60 sind, erfolgen.

Die Menge an (V) im zu stabilisierenden Polycarbonat beträgt ebenfalls 0,01 bis 10 Gew.-%, vorzugsweise 0,1 bis 5,0 Gew.-%, bezogen auf Gewicht an thermoplastischem Polycarbonat und Polyalkylenoxid (V).

Gegenstand der vorliegenden Erfindung ist somit auch die kombinierte Verwendung von kernbromierten Phthalsäurederivaten und Polyalkylenoxiden der Formel (V)

$$R - O - (CH_2 - \overset{\overset{R'}{|}}{C}H - O)_x - R \qquad (V)$$

worin R, R' und X die vorstehend genannte Bedeutung haben, zur Stabilisierung von thermoplastischen Polycarbonaten gegen die Einwirkung von Gammastrahlen.

Geeignete Polyalkylenoxide (V) sind beispielsweise Polypropylenglykole mit $\overline{M}_n$, gemessen nach GPC, zwischen 500 und 3500, die mit Dihydropyranendgruppen ausgestattet sind.

Die Einarbeitung der Polyalkylenoxide (V) in die thermoplastischen Polycarbonate erfolgt ebenfalls in bekannter Weise.

Die kombinierte Einarbeitung mit den bromierten Phthalsäurederivaten erfolgt ebenfalls in bekannter Weise.

Gegenstand der vorliegenden Erfindung sind außerdem thermoplastische Polycarbonate mit einem kombinierten Zusatz von kernbromierten Phthalsäurederivaten in Mengen von 0,01 Gew.-% bis 10 Gew.-%, vorzugsweise von 0,1 Gew.-% bis 5,0 Gew.-%, und Polyalkylenoxiden der Formel (V) ebenfalls in Mengen von 0,01 Gew.-% bis 10 Gew.-%, vorzugsweise von 0,1 Gew.-% bis 5,0 Gew.-%, bezogen jeweils auf Gewicht an thermoplastischem Polycarbonat und kernbromiertem Phthalsäurederivat bzw. auf Gewicht an thermoplastischem Polycarbonat und Polyalkylenoxid (V).

Gegenstand der vorliegenden Erfindung sind außerdem Stabilisatorkombinationen von kernbromierten Phthalsäurederivaten in Mengen von 0,01 bis 10 Gew.-Teilen, vorzugsweise von 0,1 bis 5,0 Gew.-Teilen mit Polyalkylenoxiden (V) in Mengen von 0,01 bis 10 Gew.-Teilen, vorzugsweise von 0,1 bis 5,0 Gew.-Teilen, wobei die Gew.-Teile der Komponenten innerhalb des definierten Bereichs unabhängig voneinander beliebig gewählt sein können.

Den erfindungsgemäß zu stabilisierenden Polycarbonaten können noch die üblichen Additive wie Entformungsmittel, Weichmacher, Füllstoffe und Verstärkungsstoffe in bekannter Weise zugesetzt sein.

Die Verarbeitung der erfindungsgemäß stabilisierten Polycarbonate zu Formkörpern der verschiedensten Art erfolgt in bekannter Weise durch Extrusion oder Spritzguß.

Geeignete, in der Medizin einsetzbare Formkörper sind beispielsweise Leitungen für die Sauerstoffzufuhr zum Blut, Gefäße für die Nierendialyse, Schlauchverbindungen und Herzsonden.

Die Behandlung dieser stabilisierten Formkörper mit γ-Strahlen erfolgt beispielsweise durch Bestrahlung mit einem 2 MeV van de Graff Generator. Diese Strahlungsquelle ist gemäß den DIN-Vorschriften geeicht. Eine Dosis von 30 kGy (3 Mrad) kann innerhalb von ca. 6 Minuten aufgebracht werden. Der Generator erzeugt einen Elektronenstrom von 100 µA. Im Material wird der Energieverlust der Elektronen hauptsächlich durch Ionisation, aber auch durch Bremsstrahlung bewirkt. Der direkte Zugriff auf die Strahlungsquelle erlaubt die physikalische Untersuchung der Proben direkt nach der Bestrahlung (hier treten die größten Änderungen auf). Außerdem ist von Vorteil, daß hier die Strählungsparameter variiert werden können. Bei kommerzieller Strahlensterilisation sind solche Variationen schwierig.

Beispiele

Eingesetzte Komponenten:

1. Tetrabromphthalsäureanhydrid
2. Tetrabrombisphenol-A-Oligocarbonat mit einem Polymerisationsgrad von 4 bis 6.
3. Bisphenol-A-Homopolycarbonat mit $M_w$ von etwa 28 000.
4. Tetrachlorphthalsäureanhydrid
5. NaBr und KBr
6. Polypropylenoxid der Formel (PPG) ist ein Dihydropyran terminiertes Polypropylenglykol der Formel

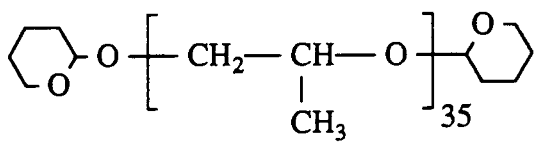

,

dessen Herstellung in der EP-OS 0 296 473, Beispiel 1, beschrieben ist.

Beispiel 1

Die Additive wurden durch Mischextrusion in ein Polycarbonatharz eingearbeitet und anschließend verspritzt. Die Spritzteile wurden mit 3,0 Mrad bestrahlt. Danach wurden die Radikalkonzentration und die Vergilbungszahl über einen Zeitraum von 10 Tagen gemessen. In Tabelle 1 sind die Deltavergilbungszahlen (Delta-VZ) angegeben, die für das Polycarbonat und die additiventhaltenden Zusammensetzungen jeweils drei Stunden und 10 Tage nach der Bestrahlung gemessen wurden.

Die Tetrabromphthalsäureanhydrid enthaltenden Zusammensetzungen bewirken eine deutlich bessere Stabilisierung der Polycarbonate gegen die Einwirkung von Gammastrahlen als Tetrabrombisphenol-Oligocarbonat oder andere bromhaltige Verbindungen.

Tabelle 1

| Zusammensetzung | Delta-VZ (nach 3 Stunden) | Delta-VZ (nach 10 Tagen) |
|---|---|---|
| Polycarbonat Komponente 3 (Kontrolle) | 57,3 | 39,4 |
| Polycarbonat Komponente 3 (0,5 % NaBr)* | 42,6 | 26,0 |
| Polycarbonat Komponente 3 (0,5 % KBr)* | 44,7 | 23,5 |
| Polycarbonat Komponente 3 (1,0 % Tetrachlorphthalsäureanhydrid) | 41,3 | 21,4 |
| Polycarbonat Komponente 3 (1,0 Tetrabrom-bisphenol-A-Oligocarbonat) | 35,4 | 19,5 |
| Polycarbonat Komponente 3 (1,0 % Tetrabromphthalsäureanhydrid)* | 23,2 | 10,7 |

* höhere Mengen führen zur Trübung der Polycarbonate

Beispiel 2

Es ist allgemein bekannt, daß die Stabilität eines Materials gegen die Einwirkung von Strahlen sich auch durch die Bestimmung der Radikalkonzentration des Materials nach der Bestrahlung messen laßt. Radikalkonzentrationen lassen sich u.a. durch Elektronenspinresonanzmethoden (ESR) bestimmen. Nach der Bestrahlung enthält das Bisphenol-A-polycarbonat eine große Anzahl von Radikalen. Die Abnahme dieser Anzahl in stabilisatorenhaltigen Polycarbonatzusammensetzungen ist ein Nachweis für stabilisierende Eigenschatten. Tabelle 2 vergleicht die relative Radikalkonzentration von Polycarbonat mit Zusammensetzungen, die Brom als Radikalfänger enthalten, jeweils drei Stunden und zehn Tage nach der Bestrahlung. Die Angaben zeigen die Wirksamkeit der Tetrabromphthalsäureanhydridderivate als Strahlenfänger.

Tabelle 2

| Zusammensetzung | Relative Radikalkonz. (nach 3 Stunden) | Relative Radikalkonz. (nach 10 Tagen) |
|---|---|---|
| Polycarbonat Komponente 3 | 215 581 | 19 913 |
| Polycarbonat Komponente 3 (0,5 % NaBr) | 337 958 | 16 857 |
| Polycarbonat Komponente 3 (0,5 % KBr) | 309 337 | 23 109 |
| Polycarbonat Komponente 3 (1,0 % Tetrachlorphthalsäureanhydrid) | 332 255 | 28 347 |
| Polycarbonat Komponente 3 (1,0 Tetrabrom-bisphenol-A-Oligocarbonat | 190 901 | 12 314 |
| Polycarbonat Komponente 3 (1,0 % Tetrabromphthalsäureanhydrid) | 26 876 | 2 292 |

Beispiel 3

Die Additive wurden durch Mischextrusion in ein Polycarbonatharz eingearbeitet und anschließend verspritzt. Die Spritzteile wurden mit 3,0 Mrad. bestrahlt. Danach wurden die Radikalkonzentration und die Vergilbungszahl über einen Zeitraum von 10 Tagen gemessen. In Tabelle 1 sind die Deltavergilbungszahlen (Delta-VZ) angegeben, die für das Polycarbonat und die additiventhaltenden Zusammensetzungen jeweils drei Stunden und 10 Tage nach der Bestrahlung gemessen wurden. Die Tetrabromphthalsäureanhydridenthaltenden Zusammensetzungen bewirken eine deutlich bessere Stabilisierung der Polycarbonate gegen die Einwirkung von Gammastrahlen als Tetrabrom-Bisphenol-A-Oligocarbonat oder andere bromhaltige Verbindungen.

Tabelle 3

| Zusammensetzung | Delta-VZ (nach 3 Stunden) | Delta-VZ (nach 10 Tagen) |
|---|---|---|
| Polycarbonat Komponente 3 (Kontrolle) | 57,3 | 39,4 |
| Polycarbonat Komponente 3 (1,0 % Komponente 6) | 37,5 | 19,8 |
| Polycarbonat Komponente 3 (1,0 % Tetrabrom-bisphenol-A-Oligocarbonat) | 30,8 | 12,6 |
| Polycarbonat Komponente 3 (1,0 % Tetrachlorphthalsäureanhydrid) | 41,3 | 19,9 |
| Polycarbonat Komponente 3 (1,0 % Tetrabrom-bisphenol-A-Oligocarbonat und 1 % Komponente 6) | 28,9 | 9,4 |
| Polycarbonat Komponente 3 (1,0 % Tetrabromphthalsäureanhydrid) (1,0 % Komponente 6) | 12,3 | 6,3 |

Beispiel 4

Die Radikalkonzentration wird wie im Beispiel 2 ermittelt. Die Angaben zeigen die Wirksamkeit der Tetrabromphthalsäureanhydridderivate als Strahlenfänger.

Tabelle 4

| Zusammensetzung | Relative Radikalkonzentration (nach 3 Stunden, nach 10 Tagen) | |
|---|---|---|
| Polycarbonat Komponente 3 | 339 595 | 34 522 |
| Polycarbonat Komponente 3 (1,0 % Komponente 6) | 255 083 | 8 212 |
| Polycarbonat Komponente 3 (1,0 % Tetrabrom-bisphenol-A-Oligocarbonat) | 236 388 | 8 628 |
| Polycarbonat Komponente 3 (1,0 % Tetrachlorphthalsäureanhydrid) | 333 255 | 28 347 |
| Polycarbonat Komponente 3 (1,0 % Tetrabrom-bisphenol-A-Oligocarbonat und 1 % Komponente 6) | 100 794 | 3 935 |
| Polycarbonat Komponente 3 (1,0 % Tetrabromphthalsäureanhydrid) (1,0 % Komponente 6) | 12 697 | 1 162 |

**Patentansprüche**

**1.** Verwendung von kernbromierten Phthalsäurederivaten, gegebenenfalls in Kombination mit Polyalkylenoxiden der Formel (V)

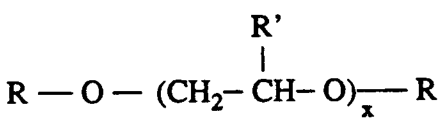

(V)

worin
R H, $C_1$-$C_6$-Alkyl, Tetrahydropyranyl oder ein Silyl-Rest,
R' H oder $C_1$-$C_6$-Alkyl und
X eine ganze Zahl von 1 bis 100 sind,
zur Stabilisierung von thermoplastischen Polycarbonaten gegen die Einwirkung von Gammastrahlen.

**2.** Thermoplastische Polycarbonate mit einem kombinierten Zusatz von kernbromierten Phthalsäurederivaten in Mengen von 0,01 Gew.-% bis 10 Gew.-%, bezogen auf Gewicht an Polycarbonat und kernbromierten Phthalsäurederivat, und Polyalkylenoxiden der Formel (V)

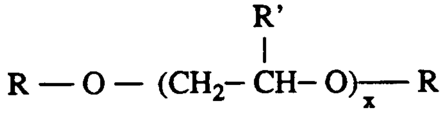

(V)

worin
R H, $C_1$-$C_6$-Alkyl, Tetrahydropyranyl oder ein Silyl-Rest,
R' H oder $C_1$-$C_6$-Alkyl und
X eine ganze Zahl von 1 bis 100 sind,
in Mengen von 0,01 Gew.-% bis 10 Gew.-%, bezogen auf Gewicht an Polycarbonat und Polyalkylenoxid (V).

**3.** Stabilisatorkombinationen von kernbromierten Phthalsäurederivaten in Mengen von 0,01 bis 10 Gew.-

Teilen mit Polyalkylenoxiden (V) in Mengen von 0,01 bis 10 Gew.-Teilen,

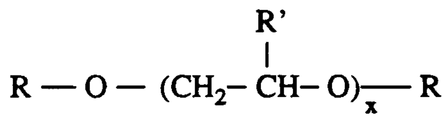

(V)

worin

- R H, $C_1$-$C_6$-Alkyl, Tetrahydropyranyl oder ein Silyl-Rest,
- R' H oder $C_1$-$C_6$-Alkyl und
- X eine ganze Zahl von 1 bis 100 sind,

wobei die Gew.-Teile der Komponenten innerhalb des definierten Bereichs unabhängig voneinander beliebig gewählt sein können.